# EUROPEAN PATENT APPLICATION

(11) **EP 2 916 027 A2**
(43) Date of publication of application: **09.09.2015**
(21) Application number: 14382170.0
(22) Date of filing: 14.05.2014
(51) Int. Cl.: F16D 49/00, F16D 65/10

(54) **Disc brake**

(30) Priority: 03.03.2014 ES 201430283
(71) Applicant: Marin Romero, José, 30012 Santiago el Mayor-Murcia (ES)
(72) Inventor: Marin Romero, José, 30012 Santiago el Mayor-Murcia (ES)
(74) Representative: Carvajal y Urquijo, Isabel

(57) **Abstract**

A disc brake, which comprises a disc (1) with a grooved structure, with a V-shaped radial cross-section (2), and at least one wedge-shaped brake pad (6), which is arranged inside the grooved structure (2) of the disc (1), with the inclined surfaces (7) in a position parallel to the inclined surfaces (4) of the grooved profile (2). The brake pad (6) is connected to an external actuation means capable of causing it to move in a direction perpendicular to the rotating shaft (5).

## Description

### Field of the invention

The present invention relates to a disc brake, which comprises a disc that is integral to a rotating shaft and at least one brake pad that acts on the surface(s) of the disc in a direction parallel to the rotating shaft.

### Background of the invention

Disc brakes of the type indicated are widely used, for example in the automotive industry, and are formed of a disc or flat circular plate, the surfaces of which face the brake pads, which may be moved in a direction parallel to the rotating shaft via the activation of a hydraulic cylinder, being able to meet the surfaces of the disc and be pressed against the same, in order to obtain the braking effect.

In the type of disc brakes described, the brake pads are normally arranged facing each other in opposite positions, in such a way that they act on both surfaces of the disc, which causes the disc and brake pads to get hot when long and hard braking actions are carried out, resulting in the loss of braking effect.

Another problem with traditional disc brakes is that the surfaces of the disc or plate, on which the brake pads must act, are exposed to dust and other atmospheric agents, resulting in the risk of said surfaces deteriorating.

### Description of the invention

The present invention has as its object a disc brake, of the type presented, formed in such a way that it enables a greater braking effect to be obtained than with traditional brakes and greater braking safety, due to the special make-up of the brake components, which have a greater cooling effect on the disc.

According to the invention, the brake disc has a grooved structure with a V-shaped radial cross-section, and the brake pad takes a wedged shape and is housed inside the grooved structure of the disc, with the inclined surfaces of the wedge-shaped brake pad facing the inclined surfaces of the grooved structure of the disc.

Preferably, the wedge-shaped brake pad has the same angle as the V-shaped radial cross-section of the disc, both with surfaces inclined symmetrically about the middle plane perpendicular to the rotating shaft. In this way, the inclined surfaces of the wedge are parallel to the inclined surfaces of the V-shaped radial cross-section of the disc.

The brake may include a single brake pad or more than one, all housed in the grooved disc. Each brake pad is mounted on an external support, about which it may move in a direction perpendicular to the rotating shaft. This movement is achieved via the brake pad actuation means arranged between the support and the brake pad. Said actuation means may consist of a hydraulic cylinder.

In order to obtain the breaking effect, the actuation means are activated, causing the brake pad to move towards the inside of the grooved structure of the disc until it meets and presses against the inclined surfaces of said grooved structure, in such a way that the braking effect is carried out with each brake pad on the two inclined surfaces of the grooved structure of the disc. This situation causes a better and greater braking effect to be obtained with each brake pad, enabling smoother braking with less pressure from the brake pedal, all due to the fact that each brake pad uses both inclined faces of the wedge to brake. Another advantage is that warping of the brake pad is avoided by braking through the two opposite inclined surfaces of the wedge at the same time.

As the brake pad or pads are arranged inside the grooved structure of the disc, the outer surface thereof is completely free, enabling a greater cooling effect to be obtained. This effect may be increased by equipping the disc with cooling fins on the outer surfaces of the wall of the grooved structure, which may also be inclined in such a way that they direct the airflow to obtain the greatest cooling effect possible.

In addition, through-holes may be made in the walls of the grooved structure, inclined in such a way that air is taken in towards the central groove when the disc rotates, thus cooling both the disc and brake pads.

### Brief description of the drawings

A non-limiting exemplary embodiment is shown in the accompanying drawings, where:
- Figure 1 is a diametric section of a disc brake formed according to the invention.
- Figure 2 is a perspective of the brake pad that forms part of the brake in figure 1.
- Figure 3 is a perspective of the external support on which the brake pad is mounted.
- Figure 4 is a side elevation of the brake disc in figure 1.

### Detailed description of an embodiment

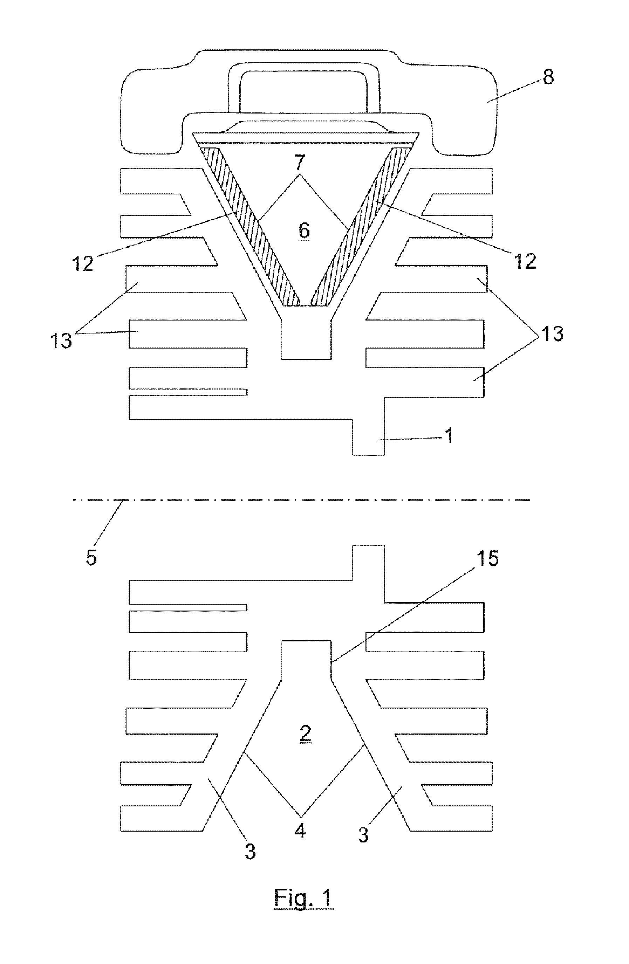

Figure 1 shows a disc brake formed according to the invention, which comprises a disc (1) with a grooved structure that defines a peripheral V-shaped housing (2), delimited by walls (3) that have surfaces inclined symmetrically (4) about the central plane perpendicular to the disc shaft (5).

One or more brake pads (6) with a wedge-shaped profile are arranged inside the grooved housing (2), with the same angle as the grooved housing (2), in such a way that the inclined surfaces (7) of the wedge-shaped brake pad (6) are parallel to the inclined surfaces (4) of the grooved housing (2) of the disc.

Each wedge-shaped brake pad (6) is mounted on an external support (8), to which it is connected through actuation means that may consist of a hydraulic cylinder (9) mounted between the support (8) and the brake pad (6).

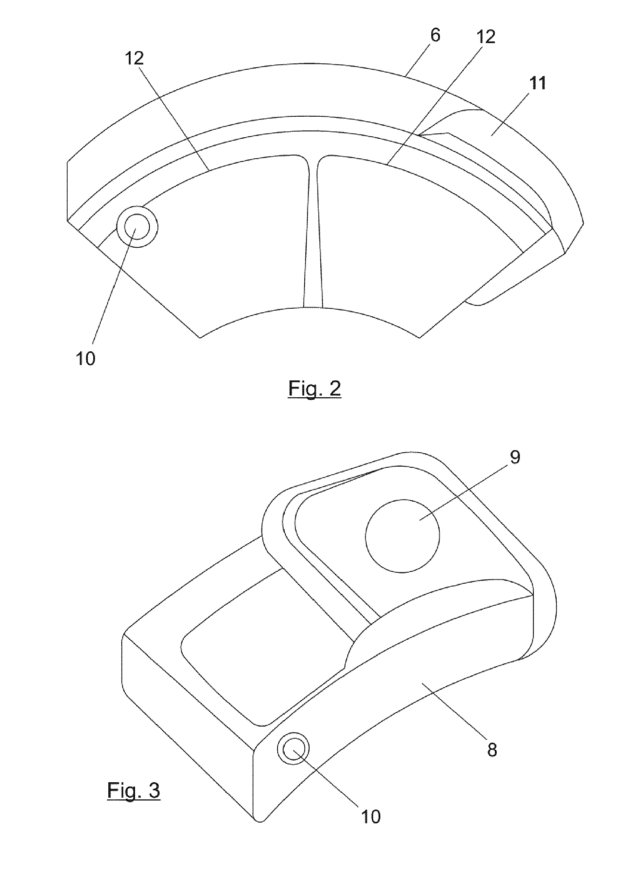

According to one possible embodiment, the brake pad (6) is articulated with the support (8) through a joint shaft (10) that is parallel to the disc (1) shaft (5), the hydraulic cylinder (9) that constitutes the actuation means of the brake pad (6) acting on an area (11), figure 2, at a remove from the joint shaft (10), in such a way that the brake pad (6) can swivel around the joint shaft (10) in a direction perpendicular to the disc shaft (5) via the activation of the hydraulic cylinder (9).

With this make-up, by activating the cylinder (9) and causing the brake pad (6) to swivel around the joint shaft in a certain direction, said brake pad is made to move closer to the inclined surfaces (4) of the grooved structure (2), meeting and putting pressure on the same to obtain the desired braking effect. By causing the hydraulic cylinder (9) to retract, the brake pad (6) swivels in the opposite direction, in such a way that the inclined surfaces (7) thereof separate from the inclined surfaces (4) of the grooved structure (2).

The brake pads (6) may be formed of a resistant wedge-shaped body, the inclined surfaces thereof being equipped with a coating (12) that enhances the braking effect on the inclined surfaces (4) of the grooved structure (2).

Preferably, the walls (3) of the grooved structure (2) should be equipped with external fins (13), thus increasing the disc-cooling effect.

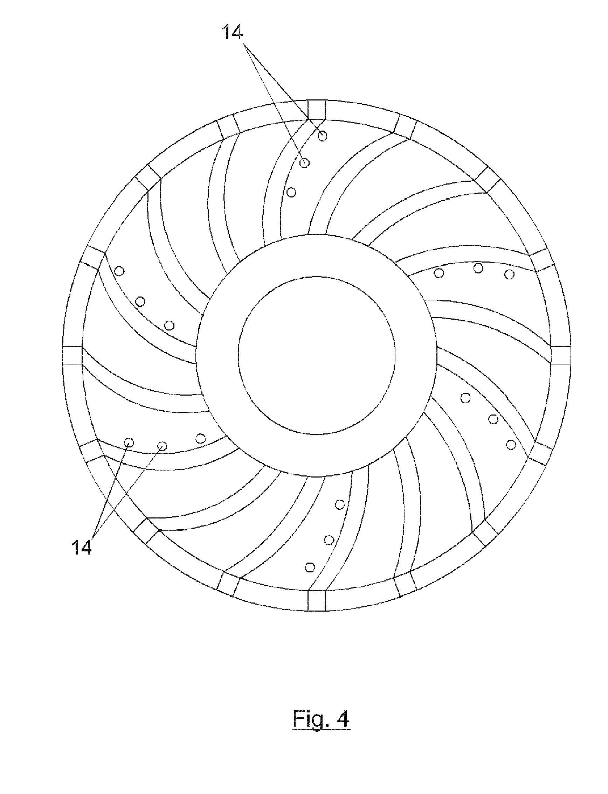

In addition, drill holes (14) may pass through the walls (3) of the grooved structure (2) of the disc, figure 4, through which the air is taken into the groove (2), which serves to cool the inner surface of the walls (4) and also the brake pads (6).

Both the external fins (13) and the through drill holes (14) are appropriately inclined to guide the air current as the disc rotates so as to increase the cooling effect.

Heat dissipation is obtained naturally with the aforementioned configuration, both from the disc and the brake pad, as well as both inside and outside the disc. By keeping both the disc and brake pad from getting so hot, there is no loss of braking effectiveness, nor are cracks produced in the disc components.

In conclusion, the brake of the invention makes it possible to obtain greater braking power and a greater cooling effect on the disc and brake pad.

As may be seen in figure 1, the inside of the grooved structure (2) of the disc may end in a section (15) with parallel surfaces.

## Claims

1. Disc brake, which comprises a disc that is integral to a rotating shaft, and at least one brake pad that acts on the surfaces of the disc in a direction parallel to the rotating shaft, **characterised in that:**
- The disc (1) has a grooved structure with a V-shaped radial cross-section (2);
- The brake pads (6) adopt the shape of a wedge with an angle equal to that of the grooved structure (2) of the disc, being arranged inside the grooved structure, with the inclined surfaces (7) in a position parallel to the inclined surfaces (4) of the grooved profile (2), and being connected to an external actuation means capable of causing it to move in a direction perpendicular to the rotating shaft (5).

2. Brake according to claim 1, **characterised in that** each brake pad (6) is mounted on an external support (8), with the ability to move in a direction perpendicular to the rotating shaft (5), and is connected to said support through the actuation means.

3. Brake according to claim 2, **characterised in that** each brake pad (6) is mounted on an external support (8) via a joint shaft (10) parallel to the rotating shaft (5).

4. Brake according to the claims 1 or 2, **characterised in that** the actuation means consists of a hydraulic cylinder (9) mounted between the support (8) and the brake pad (6).

5. Brake according to claim 1, **characterised in that** the walls (3) of the disc are provided with external cooling fins (13).

6. Brake according to claim 1, **characterised in that** walls (3) of the grooved disc are provided with through-holes (14).
